# EUROPEAN PATENT SPECIFICATION

(11) **EP 4 043 531 B1**
(45) Date of publication and mention of the grant of the patent: **17.06.2026**
(21) Application number: 20875324.4
(22) Date of filing: 08.10.2020
(51) Int. Cl.: C09K 5/00, C09K 5/02, F28D 17/00, F25B 23/00, F28D 11/02, F28D 19/00

(54) **METHOD FOR HEATING AND COOLING FLUIDS, COMPUTER PROGRAM PRODUCT AND DEVICE FOR COOLING AND HEATING FLUIDS**
VERFAHREN ZUM HEIZEN UND KÜHLEN VON FLUIDEN, COMPUTERPROGRAMMPRODUKT UND VORRICHTUNG ZUM KÜHLEN UND ERWÄRMEN VON FLUIDEN
PROCÉDÉ POUR CHAUFFER ET REFROIDIR DES FLUIDES, PRODUIT PROGRAMME INFORMATIQUE ET DISPOSITIF POUR REFROIDIR ET CHAUFFER DES FLUIDES

(30) Priority: 09.10.2019 ES 201930885
(43) Date of publication of application: 17.08.2022
(73) Proprietor: Universidade da Coruña, 15071 A Coruña (ES)
(72) Inventor: ARTIAGA DÍAZ, Ramón Pedro, 15403 FERROL (ES); LÓPEZ BECEIRO, Jorge José, 15403 FERROL (ES)
(74) Representative: ZBM Patents - Zea, Barlocci & Markvardsen
(86) International application number: PCT/ES2020/070612
(87) International publication number: WO 2021/069787

(56) References cited:
- WO-A1-2018/069506
- US-A1- 2019 032 969
- US-A1- 2019 032 969
- US-A1- 2019 145 671
- US-A1- 2019 145 671
- KITANOVSKI ANDREJ ET AL: "Present and future caloric refrigeration and heat-pump technologies", INTERNATIONAL JOURNAL OF REFRIGERATION, ELSEVIER, AMSTERDAM, NL, vol. 57, 16 June 2015 (2015-06-16), pages 288 - 298, XP029280513, ISSN: 0140-7007, DOI: 10.1016/J.IJREFRIG.2015.06.008
- DE OLIVEIRA N: "Barocaloric effect and the pressure induced solid state refrigerator", JOURNAL OF APPLIED PHYSICS, AMERICAN INSTITUTE OF PHYSICS, 2 HUNTINGTON QUADRANGLE, MELVILLE, NY 11747, vol. 109, no. 5, 11 March 2011 (2011-03-11), pages 53515 - 53515, XP012147618, ISSN: 0021-8979, DOI: 10.1063/1.3556740
- APREA C ET AL: "The use of barocaloric effect for energy saving in a domestic refrigerator with ethylene-glycol based nanofluids: A numerical analysis and a comparison with a vapor compression cooler", ENERGY, ELSEVIER, AMSTERDAM, NL, vol. 190, 23 October 2019 (2019-10-23), XP085957625, ISSN: 0360-5442, [retrieved on 20191023], DOI: 10.1016/J.ENERGY.2019.116404
- GRECO A ET AL: "A review of the state of the art of solid-state caloric cooling processes at room-temperature before 2019", INTERNATIONAL JOURNAL OF REFRIGERATION, ELSEVIER, AMSTERDAM, NL, vol. 106, 5 July 2019 (2019-07-05), pages 66 - 88, XP085861095, ISSN: 0140-7007, [retrieved on 20190705], DOI: 10.1016/J.IJREFRIG.2019.06.034
- GREC O A ET AL.: "A review of the state of the art of solid-state caloric cooling processes at room-temperature before 2019", INTERNATIONAL JOURNAL OF REFRIGERATION, vol. 106, 5 July 2019 (2019-07-05), AMSTERDAM, NL, pages 66 - 88, XP085861095, ISSN: 0140-7007, DOI: 10.1016/j.ijrefrig. 2019.06.03 4
- APREA C ET AL.: "The employment of caloric-effect materials for solid-state heat pumping", INTERNATIONAL JOURNAL OF REFRIGERATION, vol. 109, 20 September 2019 (2019-09-20), AMSTERDAM, NL, pages 1 - 11, XP085938833, ISSN: 0140-7007, DOI: 10.1016/j.ijrefrig. 2019.09.01 1
- APREA CIRO, GRECO ADRIANA, MAIORINO ANGELO, MASSELLI CLAUDIA: "Enhancing the heat transfer in an active barocaloric cooling system using ethylene-glycol based nanofluids as secondary medium", ENERGIES, vol. 12, 28 July 2019 (2019-07-28), pages 2902, XP055816981, DOI: 10.3390/enl2152902

## Description

The present invention refers to a method for heating and cooling fluids. Furthermore, the invention further refers to a device and a computer program product suitable for implementing the method.

### BACKGROUND

At present, it is estimated that known forms of cooling consume between 25 and 30% of the world's electricity, which represents a high environmental impact and a significant energy expenditure.

Most of the methods used today employ vapor compression systems for cooling, which has raised concerns about the environmental impact that may be caused by this technique and the materials used therefor.

On the other hand, barocaloric materials, that is, materials undergoing a temperature change when pressure is applied to them under adiabatic conditions, that is, without exchanging heat with their surroundings, are known. Among these materials, materials with a direct barocaloric effect stand out which, when that pressure rises, undergo a reversible transition in an exothermic sense (they heat up when pressure rises) while, when pressure decreases, the reverse transition occurs. There are also materials with inverse barocaloric effect which, as pressure raises, they undergo a reversible transition in the endothermic sense while, as the pressure decreases, the reverse transition occurs.

However, no effective method is known so far that allows separating the heating and cooling areas from a barocaloric material, so that the operation as a heating and/or cooling device is still not quite efficient. There may be approaches using particles of solid barocaloric materials dispersed in liquids, but it remains a very low efficiency approach.

US2019145671A1 discloses a device for cooling and heating fluids according to the preamble of independent claim 1, in more detail, a heat pump system including a caloric heat pump with a regenerator housing that is rotatable about an axial direction. A caloric material is disposed within a chamber of the regenerator housing. The caloric material defines a plurality of channels that extend along the axial direction through the caloric material. The channels of the plurality of channels are spaced from one another along a circumferential direction within the caloric material. A working fluid is flowable through the plurality of channels between end portions of the regenerator housing.

There is thus a need for a device that at least partially overcomes the above mentioned issues.

### DESCRIPTION OF THE INVENTION

In a first aspect, a method for heating and cooling fluids according to independent claim 8 is provided. Said method can be performed by means of a device according to independent claim 1.

In this way, it is possible to efficiently separate the heating and cooling areas of a barocaloric material. With this, it is thus possible to dispense with greenhouse gases commonly used in cooling through known techniques.

Thus, in the method and the device associated therewith (which performs said method) provided herein, the fluid flowing at a predetermined pressure through the compartment with the barocaloric material can be the fluid that is heated or the fluid that is cooled.

The method and the device associated therewith (performing said method) provided herein may be used to produce heating by heating a (first) fluid that is cooled outside the device, as well as to produce cooling by cooling a (second) fluid that is heated outside the device (as with any refrigerator or air conditioner).

Performing of the method may be or may not be cyclical and may be started at any step, whether it is a barocaloric material heating or cooling step, for example.

It is important to note that the device may comprise more than one compartment, although barocaloric material must be received within at least one of them. In some examples, each compartment may receive barocaloric material therein. In the case of, for example, two compartments, and with both containing barocaloric material, each compartment may be at a different phase, absorbing heat (cooling of the corresponding fluid) or transferring heat (heating of the corresponding fluid), that is, one of them may be in the cooling area of the second fluid, while the other may be in the heating area of the first fluid. In the event that no barocaloric material is present in any of the compartments, in the area where said compartment is located, flow of fluid may not be necessary.

It is also important to note that the compartments may be watertight or nearly watertight. The compartments may be made up or formed to be as tight as possible between them.

According to the invention, the compartment or compartments are arranged within a chamber of the device. Said chamber may have a cylindrical configuration, although other geometries are also possible.

In some examples, the step of connecting the compartment to the first fluid circuit may comprise:
. moving the compartment towards a first area of the device where the first fluid circuit is located;
. acting on the first fluid circuit so as to cause the first fluid to flow through the compartment at the first predetermined pressure.

In the same way, it is also possible to move the first fluid circuit jointly (or together) with the chamber (and any walls, housing, etc. forming the chamber) into the compartment. Moving of the compartment towards the first circuit or from the first circuit (together with the chamber) towards the compartment may be referred to as the relative displacement between the first circuit (together with the chamber) and the compartment.

With such relative displacement between the first circuit (together with the chamber) and the compartment, the first fluid flowing through the first area of the device is heated due to the exothermic transformation of the barocaloric material.

On the other hand, activation of the first fluid circuit may be carried out at the beginning of the method or while the method is being performed, for example, once the compartment has been connected to the first fluid circuit.

On the other hand, the step of connecting the compartment to the second fluid circuit may comprise:
· moving the compartment towards a second area of the device where the second fluid circuit is located;
. acting on the second fluid circuit so as to cause the second fluid to flow through the compartment at the second predetermined pressure.

In the same way, it is also possible to move the second fluid circuit jointly with the chamber (and any walls, housing, etc. forming the chamber) towards the compartment. Moving of the compartment towards the second circuit or from the second circuit (together with the chamber) towards the compartment may be referred to as the relative displacement between the second circuit (together with the chamber) and the compartment.

With this relative displacement between the second circuit (together with the chamber) and the compartment, the second fluid flowing through the second area of the device is cooled due to the endothermic transformation of the barocaloric material.

On the other hand, the activation of the second fluid circuit may be carried out at the beginning of the method or while the method is being performed, for example, once the compartment has been connected to the second fluid circuit.

According to some examples, the first fluid may be at a first temperature and the second fluid may be at a second temperature, both before the first and second fluids come into contact with the barocaloric material. In this case, the method may comprise, prior to connecting the compartment to the second fluid, connecting the compartment to a third fluid circuit so that a third fluid at the first predetermined pressure and at an intermediate temperature with respect to the first temperature and the second temperature flows through the compartment, so as to adapt or approximate the temperature of the barocaloric material to the temperature of the second fluid. Said first and second temperatures may vary at the corresponding first and second areas, respectively, so said intermediate temperature may be a temperature that is between a first average of the first (variable) temperature and a second average of the second (variable) temperature.

Initially, both the first fluid and the second fluid may be at the same temperature (for example, at room temperature) but as they reach a steady state, the first fluid is heated and the second fluid is cooled. With respect to the third fluid, it may also be initially at the same temperature, but when the steady state is reached it will get an intermediate temperature (between a first average of the first variable temperature and a second average of the second variable temperature). Such intermediate temperature of the third fluid may undergo fluctuations, that is, it may be variable as well.

In some examples, the step of connecting the compartment to the third fluid circuit may comprise:
. moving the compartment towards a third area of the device where the third fluid circuit is located;
. acting on the third fluid circuit so as to cause the third fluid to flow through the compartment at the first predetermined pressure and at the intermediate temperature.

In the same way, it is also possible to move the third fluid circuit jointly with the chamber (and any walls, housing, etc. forming the chamber) towards the compartment. Moving of the compartment towards the third circuit or from the third circuit (together with the chamber) towards the compartment may be referred to as the relative displacement between the third circuit (together with the chamber) and the compartment. On the other hand, the activation of the third fluid circuit can be carried out at the beginning of the method or while it is being performed, for example, once the compartment has been connected to the third fluid circuit.

As discussed above, the first fluid may be at a first temperature and the second fluid may be at a second temperature, both before the first and second fluids come into contact with the barocaloric material. The method may comprise, prior to connecting the compartment to the first fluid:
- Connecting the compartment to a fourth fluid circuit so that a fourth fluid at the second predetermined pressure and at an intermediate temperature with respect to the first temperature and the second temperature flows through the compartment, so as to adapt the temperature of the barocaloric material to the temperature of the first fluid.

As stated above, both the first fluid and the second fluid may initially be at the same temperature (for example, at room temperature) but as the steady state is reached, the first fluid is heated and the second fluid is cooled. With respect to the fourth fluid, it may also be at the same temperature, but when the steady state is reached it will get an intermediate temperature.

According to some examples, the step of connecting the compartment to the fourth fluid circuit may comprise:
. moving the compartment towards a fourth area of the device where the fourth fluid circuit is located;
. acting on the fourth fluid circuit so as to cause the fourth fluid to flow through the compartment at the second predetermined pressure and at an intermediate temperature with respect to the first temperature and the second temperature.

Said first and second temperatures may vary in the corresponding first and second areas, respectively, such that said intermediate temperature may be a variable temperature that is between a first average of the first (variable) temperature and a second average of the second (variable) temperature.

In this way, a fluid (third and fourth fluid respectively) can flow through the third and fourth areas at said intermediate temperature in order to approximate the temperature of the barocaloric material to that of the area to be then passed through. This intermediate temperature may be approximately the same temperature in both third and fourth fluids. In some examples, the third and fourth fluids may be the same fluid, although they are at different pressures, such that while in the third area this helps to complete cooling before entering the barocaloric material in the second area, in the fourth area this helps to complete hearing up before entering the first area.

It is also possible to move the fourth fluid circuit jointly with the chamber (and any walls, housing, etc. forming the chamber) towards the compartment. Moving of the compartment towards the fourth circuit or from the fourth circuit (together with the chamber) towards the compartment may be referred to as the relative displacement between the fourth circuit (together with the chamber) and the compartment.

On the other hand, the activation of the fourth fluid circuit may be carried out at the beginning of the method or while it is being performed, for example, once the compartment has been connected to the fourth fluid circuit.

In some examples, the movement of the compartment or compartments (or of the fluid circuits together with the chamber) may be synchronized with the activation of the flow of the different fluids through the interior thereof.

In some examples, heating of the first fluid by heat transfer of the barocaloric material may be performed until the first fluid reaches a predetermined temperature or until a heating rate of the first fluid drops below a predetermined value.

On the other hand, cooling of the second fluid by heat transfer to the barocaloric material may be carried out until the second fluid reaches a predetermined temperature or until a cooling rate of the second fluid drops below a predetermined value.

In any case, the residence time of a compartment in each area may be predetermined by test experiences or by calculations. Even so, it is not necessary to predetermine it, especially when different barocaloric materials are desired to be tested. Time thresholds may be set by temperature measurements, so that the criterion for an area change may be temperature, but it may also be a temperature change rate. In the latter case, when the heat transfer rate becomes slow, because the temperature difference between the barocaloric material and the fluid becomes smaller and smaller, it may not compensate for continuing to wait because time is wasted. The value at which this decision must be taken may be set based on efficiency and cost for keeping the aforementioned device in operation. Consequently, the movement of the compartment (or of the fluid circuits jointly with the chamber) from one area of the device to another may not be continuous but step-wise or jump-wise, so that, after remaining in one area for some time, the compartment (or the corresponding fluid circuit together with the chamber) is moved to another area. When movement is carried out by the different fluid circuits (together with the chamber), it means that the compartment with barocaloric material is static and the different fluid circuits jointly with the chamber are the ones being moved. In some examples, continuous travel may be achieved by adjusting a speed of a rotor and a width of dividing members forming the compartments, and properly synchronizing the communication with the circuits through which the fluids flow.

Details of such rotor and dividing members are explained and provided elsewhere in the disclosure.

It follows from the foregoing that different barocaloric materials may be provided in the compartment.

The barocaloric material may have a direct barocaloric effect, in which case the first predetermined pressure is higher than the second predetermined pressure. A material with a direct barocaloric effect is a material that, when the pressure rises, it undergoes a reversible transition in the exothermic sense and, when the pressure decreases, the reverse transition occurs, in the endothermic sense. That is, as the pressure increases, the barocaloric material is heated at a working pressure and temperature range.

The barocaloric material may have a reverse barocaloric effect, so that the first predetermined pressure is lower than the second predetermined pressure. A material with inverse barocaloric effect is a material that, when the pressure rises, it undergoes a reversible transition in the endothermic sense and, when the pressure decreases, the inverse transition occurs, in the exothermic sense. That is, as the pressure increases, the barocaloric material is cooled, at the working pressure and temperature range.

In some examples, the barocaloric material may have several transitions at different pressure and temperature ranges, and some transitions may be with a direct barocaloric effect and others with an inverse barocaloric effect.

Moving of the compartment (or of the corresponding fluid circuit jointly with the chamber) from one area of the device to another may be carried out by rotation about a (longitudinal) shaft of the chamber, for example, when the configuration of the chamber is cylindrical. In the case of other chamber geometries, movement either of the compartment or of the corresponding fluid circuit (together with the chamber), may be achieved by rotating an asymmetric frustoid or with any other path, which may depend on the geometry.

Furthermore, the barocaloric material provided to the compartment may be perforated. In this way, it is possible to increase the contact surface with the fluid and improve the heat transfer there between. On the other hand, the barocaloric material may be combined or coated with other materials giving, for example, structural integrity or improving some of its properties.

According to a second aspect, a computer program product according to independent claim 15 is provided. Such computer program may comprise program instructions for causing a controller to perform a method for heating and cooling fluids, such as that described above. The computer program may be stored on a physical storage medium, such as a recording medium, a computer memory, or a read-only memory, or it may be carried by a carrier wave, such as electrical or optical.

In a further aspect, a device according to independent claim 1 is provided for cooling and heating fluids.

As discussed above, the first fluid may be at a first temperature and the second fluid may be at a second temperature, both before the first and second fluids come into contact with the barocaloric material. In this case, the device for heating and cooling fluids may comprise a third fluid circuit configured to flow a third fluid through the compartment at the first predetermined pressure and at an intermediate temperature with respect to the temperature of the first fluid and the temperature of the second fluid before the first and second fluids come into contact with the barocaloric material (or with the one that covers in the event it is coated). The controller may further be configured for, prior to connecting the compartment to the second fluid circuit, connecting the compartment to the third fluid circuit so that the third fluid flows through the compartment at the first predetermined pressure and at the intermediate temperature, so as to adapt the temperature of the barocaloric material to the temperature of the second fluid.

In the same situation in which the first fluid may be at a first temperature and the second fluid at a second temperature, both before the first and second fluids come into contact with the barocaloric material, the device may comprise a fourth circuit of fluid configured to flow a fourth fluid at the first predetermined pressure and at an intermediate temperature with respect to the temperature of the first fluid and the temperature of the second fluid before the first and second fluids come into contact with the barocaloric material. The controller may be configured for, prior to connecting the compartment to the first fluid circuit, connecting the compartment to the fourth fluid circuit so that the fourth fluid flows through the compartment at the second predetermined pressure and at an intermediate temperature, so as to adapt the temperature of the barocaloric material to the temperature of the first fluid.

In some examples of the device for cooling and heating fluids, the barocaloric material may have several transition areas in an endothermic or exothermic sense and the device may comprise several fluid circuits, and each of said circuits may be configured to flow fluid at a predetermined pressure and temperature related to a specific transition area of the barocaloric material. As mentioned above, the barocaloric material may either comprise different barocaloric materials and each may have a different transition area, or the same material may have different transition areas. It may therefore be accomplished that each of the circuits can be configured to flow a fluid with a predetermined temperature and pressure as a function of a specific transition area. Temperature and pressure may be determined so as to cause the barocaloric material to reach a specific transition area.

In some examples of the device for cooling and heating fluids, two or more of the circuits may be in fluid communication with each other. In this way, fluid can be transferred there between.

Further objects, advantages and features of embodiments of the invention will become apparent to those skilled in the art upon examination of the description or may be learned by practice thereof.

### BRIEF DESCRIPTION OF THE DRAWINGS

Particular embodiments of the present invention will be described in the following by way of non-limiting example, with reference to the attached drawings, wherein:
Figure 1 shows a diagrammatic sectional representation of a device for heating and cooling fluids, according to an example of the invention. Figure 1a shows a first position of the compartment housing a barocaloric material forming part of the device, and figure 1b shows a second position of the same compartment;
Figure 2 shows a graphic representation of applied pressures and temperatures obtained throughout a complete cycle in the barocaloric material in a device according to figure 1.

### DETAILED DESCRIPTION OF EMBODIMENTS

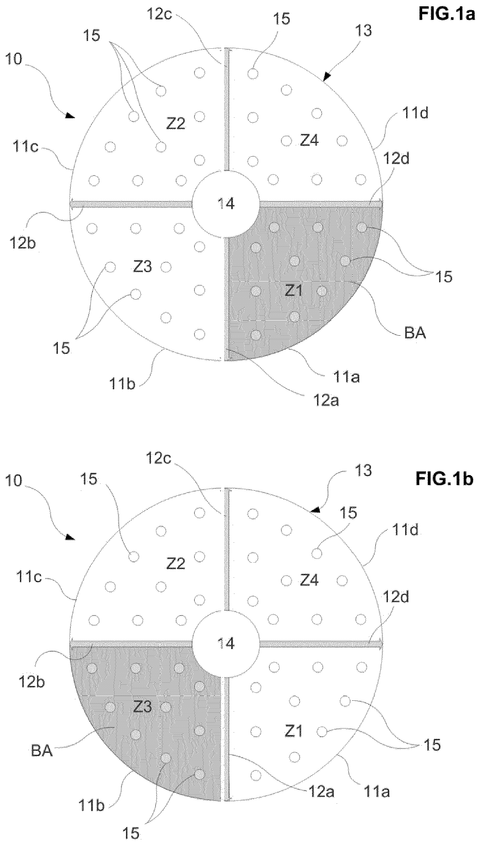

Figure 1 shows a device 10 for heating and cooling fluids according to some examples. Said device shown in figure 1 comprises four compartments 11a, 11b, 11c, 11d, although, in general, it may comprise one or more compartments, all of them received within a chamber 13. In any case, barocaloric material must be received within at least one of the compartments. It may also comprise holes 15 through which the corresponding fluid or fluids is/are allowed to flow. Said fluid can enter the chamber 13 through the holes 15 on one surface (for example, front surface) and exit the chamber 13 through holes 15 on an opposite surface (for example, rear surface). The holes 15 on the front and rear surfaces are shown in figure 1 corresponding to a front projection.

For the sake of simplicity, barocaloric material BA is received within only one of the compartments in the example shown in figure 1. In the illustrated examples, the barocaloric material BA is shown fully occupying a compartment 11a-Fig.1 a, 11b-Fig.1 b. However, it is also possible that the barocaloric material BA partially occupies the compartment, thereby leaving one or more free spaces through which the corresponding fluid is allowed to pass. Said free spaces may be of special interest when the barocaloric material lacks sufficient channel-like perforations for the fluid to freely flow there through.

Said compartments are formed by dividing members 12a, 12b, 12c, 12d.

Furthermore, said compartments may be watertight or almost watertight, although the watertightness depends, among other things, on the fitment, which may be lubricated, or on the dividing members themselves with the wall or inner surface of the chamber. When the chamber has a cylindrical shape, the tightness in addition to the dividing members themselves, may also depend on the flat surfaces of the cylinder.

As also shown in figure 1, the device 10 comprises a housing forming a chamber 13, in the case of the example shown in figure 1 with a cylindrical shape, although other geometries are also possible. Said chamber houses the above mentioned compartments 11a, 11b, 11c, 11d. A compartment 11a may be delimited by two dividing members 12a, 12d, a central rotor 14 and at least a part of the outer housing (forming the chamber 13), as well as by front and rear walls (not shown in the figure) where the fluid circuits corresponding to each area can be connected. Such configuration can be met by any of the compartments 11a, 11b, 11c, 11d.

According to the example shown in figure 1, the chamber has four areas Z1, Z2, Z3, Z4 for treating the barocaloric material, through which the different compartments pass. The number of areas depends on the configuration of the device 10, comprising at least one area for heating one fluid and one area for cooling another fluid. Each area is connected to a fluid circuit configured to flow a fluid at a given pressure.

In the case of figure 1, as stated above, the chamber 13 is divided into four compartments 11 a, 11 b, 11 c, 11 d. Each of said compartments is located exactly on one of the areas Z1, Z2, Z3, Z4, and fluids at different pressures flow through each area. In order to facilitate the description of the device 10, figure 1 is shown with only one of the compartments 11a-Fig.1a, 11b-Fig.1b with barocaloric material BA, although barocaloric material could be arranged, for example, in the four compartments. The four compartments move jointly so that while two of them are located at the highest pressure area of the chamber 13, the other two compartments are located at the lowest pressure area of the chamber 13.

Given a possible cylindrical geometry of the chamber 13, the dividing members 12a, 12b, 12c, 12d forming the compartments 11a, 11b, 11c, 11d can be rotated jointly with a central rotor 14 that is also present in the device 10. Rotation of the rotor may not be continuous but step-wise or jump-wise, so that, the barocaloric material after remaining in one of the areas Z1; Z2; Z3; Z4 (Z1 in the example of figure 1a) for some time, a rotation of the rotor occurs moving the barocaloric material BA from the area Z1 (figure 1a) to the area Z3 (figure 1b). Anything that could remain in each of the remainder areas may pass to the contiguous area, as it can be derived from figure 1.

Residence time thresholds of a compartment in each area can be set based on temperature measurements, so that the criterion for an area change may be temperature, but also temperature change rate. In the latter case, when heat transfer rate becomes slow, since the temperature difference between the barocaloric material and the fluid becomes smaller and smaller, this may not compensate for continuing to wait because time is wasted. The value at which this decision must be taken may be set based on the efficiency and cost of keeping the aforementioned device in operation. Consequently, the movement of the compartment (or of the fluid circuits together with the chamber) from one area of the device to another may not be continuous but step-wise or jump-wise, so that, after remaining in one area for some time, the compartment may be moved to the next area. A continuous movement could be performed by adjusting the speed of the rotor and the width of the dividing members and suitably synchronizing the communication with the circuits through which the fluids flow.

The movement of the rotor (and, therefore, of the barocaloric material through the different areas) described herein may be controlled by a controller (not shown), which is responsible for the activation of the different fluid circuits. Such controller may be implemented in a fully computerized, fully electronic configuration, or a combination of both.

In the case that the controller is purely a computer controller, it may comprise a memory and a processor (for example, a microprocessor), in which the memory stores computer program instructions executable by the processor, said instructions comprising functionalities for performing a method for heating and cooling fluids, which will be described later.

The memory disclosed herein may be included in the processor or it may be external. In the case of being included in the processor, it may be a memory such as, for example, of the EEPROM type. In the case that it is external, it may be, for example, a data storage medium such as magnetic disks (for example, hard disks), optical disks (for example, DVD or CD), memory cards, flash memories (e.g. flash drives) or solid state (RAM based SSD, flash-based, etc.) drives.

Therefore, the set of computer program instructions executable by the processor (such as a computer program) may be stored in a physical storage medium, such as those mentioned above, but it may also be carried by a carrier wave (the carrier medium may be any entity or device capable of carrying the program), such as electrical or optical, which may be transmitted via electrical or optical cable or by radio or any other means. Thus, when the computer program is contained within a signal that can be transmitted directly by means of a cable or other device or medium, the carrier medium may be formed of said cable or another device or medium.

Alternatively, the carrier medium may be an integrated circuit in which the computer program is embedded, said integrated circuit being adapted to carry out or be used in carrying out the relevant methods.

The computer program may be in the source code, object code, or in an intermediate code form between source code and object code, such as a partially compiled form, or in any other form suitable for use in implementing the described methods.

Regarding the processor, it may be, for example, a microprocessor, such as STM32F107VC from ST Microelectronics. Said microprocessor contains a 72 MHz ARM Cortex M3 core and includes a small EEPROM memory (that is, the above described memory is internal and corresponds to the M24512 model, also from ST Microelectronics), which allows data to be stored and which also allows the firmware of the microcontroller to be updated from, for example, a personal computer, preferably through a USB or mini USB port. The capacity of said memory is 512 Kbytes and it can communicate through I2C communication lines with the microcontroller.

Additionally, an integrated circuit may be included to protect the microcontroller against possible electrostatic discharges.

Microcontroller firmware may be defined as the software governing the behavior of the controller, that is, it corresponds to the above described set of computer program instructions.

The hardware directly associated with this microcontroller may consist of at least one 25 MHz quartz crystal, for example, required to generate the microcontroller clock signal, a JTAG connector (Joint Test Action Group, IEEE 1149.1-1990 standard) to implement programming and debugging tasks, and a whole set of decoupling capacitors required to reduce switching noise levels.

EEPROM memory associated hardware consists only of two biasing resistors to raise the voltage of the I2C communication lines, which are directly connected to the microcontroller.

On the other hand, the controller may have a purely electronic configuration, so it could be formed of a programmable electronic device such as a CPLD (Complex Programmable Logic Device), an FPGA (Field Programmable Gate Array) or an ASIC (Application-Specific Integrated Circuit).

From what has been described, the controller can make use of different types of integrated circuits, such as CPUs (Central Processing Units), microcontrollers, FPGAs (Field-Programmable Gate Arrays), CPLDs (Complex Programmable Logic Devices), ASICs (Application-Specific Integrated Circuits), SoCs (System-on-Chips) or PSoCS (Programmable SoCs).

Finally, the controller may also have a computing-electronic hybrid configuration. In this case, the controller should comprise a memory and a microcontroller to computationally implement a part of its functionalities, as well as certain electronic circuits to implement the rest of the functionalities of the device 10 for heating and cooling fluids.

Turning to figure 1, it can be seen how chamber 13 is divided into the above described four areas, although the presence of areas Z1 and Z2 could be sufficient to achieve the goal of heating and cooling fluids. The first area Z1 has a first fluid circuit (not shown) configured to flow a first fluid at a first predetermined pressure, while the second area Z2 has a second fluid circuit configured to flow a second fluid at a second predetermined pressure.

As can also be seen in figure 1, the holes (or connections) 15 allowing the flow of fluids through the compartments are located on the flat surfaces of the cylinder forming the chamber 13. In other configurations of the chamber, other connections are possible.

If a more efficient device 10 is to be achieved, at least one of the remaining areas Z3, Z4 shown may be added. The third area Z3 has a third fluid circuit (not shown) configured to flow a third fluid at the first predetermined pressure and at an intermediate temperature with respect to the temperature of the first fluid and the temperature of the second fluid, so as to adapt or approximate the temperature of the barocaloric material at the temperature of the second fluid. The fourth area Z4 has a fourth fluid circuit configured to flow a fourth fluid at the second predetermined pressure and at an intermediate temperature with respect to the temperature of the first fluid and the temperature of the second fluid, so as to adapt or approximate the temperature of the barocaloric material at the temperature of the first fluid.

With the above described configuration of the device 10 for heating and cooling fluids, the controller can perform, in the case of only the presence of the first area Z1 and the second area Z2, the steps of:
- connecting the compartment comprising the barocaloric material BA to the first fluid circuit located at the first area Z1 so that the first fluid at the first predetermined pressure flows through the compartment and the barocaloric material is heated by the effect of the first predetermined pressure, and that heat is transferred from the barocaloric material to the first fluid, causing the first fluid to be heated;
- connecting the compartment comprising the barocaloric material to the second fluid circuit that is in the second area Z2 so that the second fluid at the second predetermined pressure flows through the compartment and the barocaloric material is cooled, and that heat is transferred from the second fluid to the barocaloric material, causing the second fluid to be cooled.

The step of connecting the compartment 11a to the first fluid circuit as shown in figure 1a may comprise the following steps performed by the controller:
. moving the compartment 11a (that is, the one containing the barocaloric material BA) towards the first area Z1 of the device 10 where the first fluid circuit is located;
. acting on the first fluid circuit so as to cause the first fluid to flow through the compartment at the first predetermined pressure.

Connecting the compartment to the second fluid circuit may comprise the following steps performed by the controller:
. moving the compartment 11a towards a second area Z2 of the device 10 where the second fluid circuit is located;
. acting on the second fluid circuit so as to cause the second fluid to flow through the compartment at the second predetermined pressure.

In some examples, alternatively to moving of the compartment, the controller may cause the first and/or second fluid circuits (jointly with chamber 13) to be moved towards compartment 11a, that is, the fluid circuits move jointly with the camera 13 towards the compartment (which remains static) and not the other way around.

It is important at this point to note that performing of the method may be cyclical and that the order of the steps to be performed may be variable, which means that it may be started by heating and cooling the fluid, that is, it may be started in the first area Z1 (and it may be then passed to the second area Z2) or it may be started in the second area Z2 (and it may be then passed to the first area Z1).

In the examples where barocaloric material is received in several compartments, several cycles may be started substantially simultaneously. Each compartment may start by a different step such as, for example, heating or cooling.

In some examples, heating of the first fluid by heat transfer of the barocaloric material BA may be carried out until the first fluid reaches a predetermined temperature or until the heating rate of the first fluid drops below a predetermined value. On the other hand, cooling of the second fluid by heat transfer to the barocaloric material may be carried out until the second fluid reaches a predetermined temperature or until the cooling rate of the second fluid drops below a predetermined value.

In case the third area Z3 is present in the device 10, the controller may be configured to perform the step of:
- connecting the compartment 11a to a third fluid circuit so that a third fluid at the first predetermined pressure and an intermediate temperature with respect to the first temperature of the first fluid and the second temperature of the second fluid flows through the compartment, so as to adapt or approximate the temperature of the barocaloric material to the temperature of the second fluid.

It is important to note that both the first temperature and the second temperature are temperature values of the fluids before coming into contact with the barocaloric material BA. It is also important to note that the third area Z3 makes sense to arrange it before the second area Z2, that is, prior to connecting the compartment to the second fluid. This allows the temperature of the barocaloric material in said third area Z3 to adapt or approach the temperature of the second fluid that flows through the second area Z2.

The step of connecting the compartment 11a to the third fluid circuit may comprise:
. moving the compartment towards the third area Z3 of the device 10 where the third fluid circuit is located;
. acting on the third fluid circuit so as to cause the third fluid to flow through the compartment at the first predetermined pressure and at the intermediate temperature.

In case the fourth area Z4 is present in the device 10, the controller may be configured to perform the step of:
- Connecting the compartment to a fourth fluid circuit so that a fourth fluid at the second predetermined pressure and at an intermediate temperature with respect to the first temperature and the second temperature flows through the compartment, so as to adapt the temperature of the barocaloric material to the temperature of the first fluid.

Connecting the compartment to the fourth fluid circuit may comprise:
. moving the compartment 11a towards the fourth area Z4 of the device 10 where the fourth fluid circuit is located;
. acting on the fourth fluid circuit so as to cause the fourth fluid to flow through the compartment at the second predetermined pressure and the intermediate temperature.

The BA material used may have direct barocaloric effect, reverse barocaloric effect or any combination of both. In addition, the barocaloric material may have different configurations. Thus, for example, it may be perforated in order to increase the contact surface with the fluid and improve heat transfer. These perforations in the barocaloric material may be aligned with the connections or holes 15 in the flat surfaces through which fluids enter and leave the compartments. On the other hand, the barocaloric material may be combined with other materials providing structural integrity or improving some of its properties.

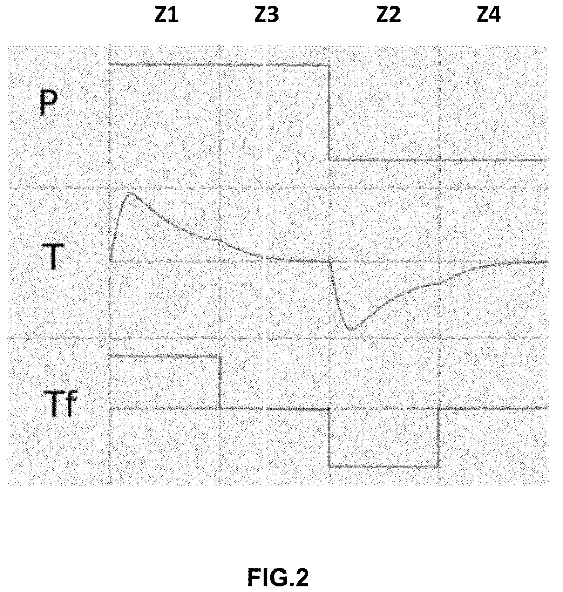

Figure 2 shows a graphic representation of the pressure (P), the temperature (T) of the barocaloric material BA and the mean temperature (Tf) of the fluid (it of course may undergo fluctuations over time), in each of the four areas Z1, Z2, Z3, Z4, that is, it is a diagram of applied pressures and temperatures obtained throughout a complete cycle in the barocaloric material. Since the barocaloric material may be received within a compartment, it can be said that it is a diagram of applied pressures and temperatures obtained throughout a complete cycle in the compartment.

In order to describe the operation of the device 10 shown in figure 1, it is assumed that the barocaloric material BA in one of the compartments enters the first area Z1, whereby the hottest fluid at the highest pressure flows. When the barocaloric material and the fluid come into contact, an exothermic transition occurs so that the heat emitted by the material is transferred to the first flowing fluid. Once said first fluid has reached the temperature set in the operating conditions, from the amount of heat emitted by the barocaloric material to the fluid, the material moves to the third area Z3, which has the same pressure as Z1 but through which the third fluid flows at a lower temperature than the fluid flowing through the first area Z1 (that is, the above described intermediate temperature). Given these parameters of Z3, it is achieved that the temperature of the barocaloric material decreases before entering the second area Z2. In Z2, the second fluid flows at the lowest pressure and at the lowest temperature. Therefore, when passing from Z3 to Z2, as the pressure decreases, the barocaloric material BA undergoes an endothermic transformation, thereby cooling the second fluid in the second area Z2. When the amount of heat set in the operating conditions is absorbed by the material, it passes to the fourth area Z4. In this fourth area Z4 the pressure is still low, but the fourth fluid is at an intermediate temperature (which may be the same as that of the third fluid) in order to speed up the heating of the barocaloric material before entering the first area Z1, for e.g. starting a new cycle.

In some examples, it is possible to arrange barocaloric material BA within each of the compartments 11a, 11b, 11c, 11d, since all four pass successively through the same areas Z1, Z3, Z2, Z4.

Consequently, from what has been described, the first fluid flowing through the first area Z1 is kept hot from the exothermic transformation of the barocaloric material BA. On the other hand, the second fluid flowing through the second area Z2 is kept cold from the endothermic transformation of the barocaloric material. Fluids at intermediate temperature flow through Z3 and Z4 in order to approximate the temperature of the barocaloric material to that of the area through which it corresponds to pass next.

In some examples, the fluid in the fluid circuits of the third area Z3 and the fourth area Z4 could be the same, although it is at different pressures, so that in Z3 this helps to complete the cooling prior to entering the barocaloric material BA in the second area Z2, while in the fourth area Z4 this helps to complete the heating up prior to entering the first area Z1 again.

It is important to note that figures 1 and 2 depict or refer to a simple geometry of device 10 (i.e., a cylindrical chamber). Other different geometries may be used and, depending on this geometry, moving of the barocaloric material BA between the different areas may be achieved, for example, by rotation about a central shaft, by rotation of an asymmetric frustoid, or by any other path, the simplest case being the one described in the figures, that is, the rotation about a central shaft within a cylindrical chamber.

The rotation of the shaft or rotor may take place step-wise or jump-wise, or it may also become continuous, remaining without moving for a set period of time, in order to allow the transfer of heat between the barocaloric material and the corresponding fluids. Movement is explained in other parts of the disclosure.

The fluids through each area flow in separate circuits, each at its own pressure. As stated above, there is the possibility that the Z3 and Z4 circuits exchange the fluid, although each one keeps its corresponding pressure.

Although only a number of particular embodiments and examples of the invention have been described herein, the skilled person will understand that other alternative embodiments and/or uses of the invention are possible, as well as obvious modifications and equivalent elements. Furthermore, the present invention encompasses all possible combinations of the specific embodiments that have been described herein. The scope of the present invention should not be limited by specific embodiments but should be determined only by a fair reading of the claims that follow.

## Claims

1. Device (10) for cooling and heating fluids, comprising:
a chamber
at least one compartment (11a, 11b, 11c, 11d) for housing a barocaloric material (BA), wherein the compartment is arranged within the chamber (13);
a first fluid circuit configured to flow a first fluid at a first predetermined pressure;
a second fluid circuit configured to flow a second fluid at a second predetermined pressure;
the first predetermined pressure and the second predetermined pressure being different from each other;
a controller;
wherein the chamber (13) has at least a first area (Z1) for heating of the barocaloric material and of the first fluid, and a second area (Z2) for cooling of the barocaloric material and of the second fluid, the first area being connected to the first fluid circuit so that the first fluid can flow through the first area, the second area being connected to the second fluid circuit so that the second fluid can flow through the second area;
wherein the compartment and the first and second fluid circuits together with the chamber are movable relative to each other, such that the compartment is movable between the first and second areas,
**characterized in that** the controller is configured to
connect the compartment (11a, 11b, 11c, 11d) to the first fluid circuit so that the first fluid at the first predetermined pressure flows through the compartment and the barocaloric material (BA) is heated under the effect of the first predetermined pressure, and that heat is transferred from the barocaloric material to the first fluid, causing the first fluid to be heated, and
to connect the compartment to the second fluid circuit so that the second fluid at the second predetermined pressure flows through the compartment and the barocaloric material is cooled by the effect of the second predetermined pressure, and that heat is transferred from the second fluid to the barocaloric material, causing the second fluid to be cooled.

2. The device (10) according to claim 1, wherein the barocaloric material (BA) is perforated, such that the first and second fluids flow through the perforations.

3. The device (10) according to any of claims 1-2, wherein the chamber (13) has a cylindrical configuration, and the chamber has a shaft, such that the movement comprises a rotation about said shaft.

4. The device (10) according to claim 3, comprising a central rotor (14), a housing that forms the chamber, the housing comprising an outer housing and front and rear walls, wherein the compartment is formed of dividing members (12a, 12b, 12c, 12d), and the compartment is delimited by two dividing members, the central rotor, at least part of the outer housing, and the front and rear walls.

5. The device (10) according to any of claims 1-4, wherein the barocaloric material has several transition areas in endothermic or exothermic sense and the device comprises at least one additional fluid circuit, each of said at least one additional fluid circuits being configured for flowing a corresponding fluid at a predetermined pressure and temperature related to a specific transition area of the barocaloric material.

6. The device (10) according to any of claims 1-5, wherein the first fluid is at a first temperature and the second fluid is at a second temperature, both before the first and second fluids come into contact with the barocaloric material,
the device further comprising a third fluid circuit configured to flow a third fluid at the first predetermined pressure and at an intermediate temperature with respect to the first temperature and the second temperature, and
the chamber further comprising a third area (Z3) connected to the third fluid circuit.

7. The device (10) according to any of claims 1-6, wherein the first fluid is at a first temperature and the second fluid is at a second temperature, both before the first and second fluids come into contact with the barocaloric material,
the device further comprising a fourth fluid circuit configured to flow a fourth fluid at the second predetermined pressure and at an intermediate temperature with respect to the first temperature and the second temperature, and
the chamber further comprising a fourth area (Z4) connected to the fourth fluid circuit.

8. Method for heating and cooling fluids, by means of a device comprising:
at least one compartment (11a, 11b, 11c, 11d) wherein a barocaloric material (BA) is provided;
a first fluid circuit configured to flow a first fluid at a first predetermined pressure;
a second fluid circuit configured to flow a second fluid at a second predetermined pressure;
wherein the first predetermined pressure and the second predetermined pressure being different from each other; and
wherein the compartment is arranged within a chamber (13), the chamber having at least a first area (Z1) for heating of the barocaloric material and of the first fluid, and a second area for cooling of the barocaloric material and of the second fluid;
wherein the compartment and the first and second fluid circuits together with the chamber are movable relative to each other, such that the compartment is movable between the first and second areas,
the method comprising:
connecting the compartment to the first fluid circuit so that the first fluid at the first predetermined pressure flows through the compartment and the barocaloric material is heated under the effect of the first predetermined pressure, and that heat is transferred from the barocaloric material to the first fluid, causing the first fluid to be heated;
connecting the compartment to the second fluid circuit so that the second fluid at the second predetermined pressure flows through the compartment and the barocaloric material is cooled under the effect of the second predetermined pressure, and that heat is transferred from the second fluid to the barocaloric material, causing the second fluid to be cooled.

9. The method according to claim 8, wherein connecting the compartment to the first fluid circuit comprises:
moving the compartment towards a first area (Z1) of the chamber where the first fluid circuit is located;
acting on the first fluid circuit so as to cause the first fluid to flow through the compartment at the first predetermined pressure.

10. The method according to any of claims 8 or 9, wherein connecting the compartment to the second fluid circuit comprises:
moving the compartment towards a second area (Z2) of the chamber where the second fluid circuit is located;
acting on the second fluid circuit so as to cause the second fluid to flow through the compartment at the second predetermined pressure.

11. The method according to any of claims 8 to 10, wherein the first fluid is at a first temperature and the second fluid is at a second temperature, both before the first and second fluids come into contact with the barocaloric material, the method comprising, prior to connecting the compartment to the second fluid:
connecting the compartment to a third fluid circuit so that a third fluid at the first predetermined pressure and at an intermediate temperature with respect to the first temperature and the second temperature flows through the compartment, so as to adapt the temperature of the barocaloric material to the temperature of the second fluid.

12. The method according to claim 11, wherein connecting the compartment to the third fluid circuit comprises:
moving the compartment towards a third area (Z3) of the chamber where the third fluid circuit is located;
acting on the third fluid circuit so as to cause the third fluid to flow through the compartment at the first predetermined pressure and at the intermediate temperature.

13. The method according to any of claims 8 to 12, wherein the first fluid is at a first temperature and the second fluid is at a second temperature, both before the first and second fluids come into contact with the barocaloric material, the method comprising, prior to connecting the compartment to the first fluid:
connecting the compartment to a fourth fluid circuit so that a fourth fluid at the second predetermined pressure and at an intermediate temperature with respect to the first temperature and the second temperature flows through the compartment, so as to adapt the temperature of the barocaloric material to the temperature of the first fluid.

14. The method according to claim 13, wherein connecting the compartment to the fourth fluid circuit comprises:
moving the compartment towards a fourth area (Z4) of the chamber where the fourth fluid circuit is located;
acting on the fourth fluid circuit so as to cause the fourth fluid to flow through the compartment at the second predetermined pressure and at the intermediate temperature.

15. Computer program product comprising program instructions which when executed by a controller, cause the controller to carry out a method according to any of claims 8 to 14 for heating and cooling fluids.

## Patentansprüche

1. Vorrichtung (10) zum Kühlen und Erwärmen von Fluiden, umfassend:
eine Kammer
mindestens ein Abteil (11a, 11b, 11c, 11d) zum Aufnehmen eines barokalorischen Materials (BA), wobei das Abteil innerhalb der Kammer (13) angeordnet ist;
einen ersten Fluidkreislauf, der dazu konfiguriert ist, ein erstes Fluid bei einem ersten vorbestimmten Druck zu strömen;
einen zweiten Fluidkreislauf, der dazu konfiguriert ist, ein zweites Fluid bei einem zweiten vorbestimmten Druck zu strömen;
wobei sich der erste vorbestimmte Druck und der zweite vorbestimmte Druck voneinander unterscheiden;
eine Steuerung;
wobei die Kammer (13) mindestens einen ersten Bereich (Z1) zum Erwärmen des barokalorischen Materials und des ersten Fluids und einen zweiten Bereich (Z2) zum Kühlen des barokalorischen Materials und des zweiten Fluids aufweist, wobei der erste Bereich mit dem ersten Fluidkreislauf verbunden ist, so dass das erste Fluid durch den ersten Bereich strömen kann, wobei der zweite Bereich mit dem zweiten Fluidkreislauf verbunden ist, so dass das zweite Fluid durch den zweiten Bereich strömen kann;
wobei das Abteil und der erste und zweite Fluidkreislauf zusammen mit der Kammer relativ zueinander beweglich sind, so dass das Abteil zwischen dem ersten und zweiten Bereich beweglich ist,
**dadurch gekennzeichnet, dass** die Steuerung dazu konfiguriert ist,
das Abteil (11a, 11b, 11c, 11d) mit dem ersten Fluidkreislauf zu verbinden, so dass das erste Fluid bei dem ersten vorbestimmten Druck durch das Abteil strömt und das barokalorische Material (BA) unter der Wirkung des ersten vorbestimmten Drucks erwärmt wird, und dass Wärme von dem barokalorischen Material auf das erste Fluid übertragen wird, wodurch das erste Fluid erwärmt wird, und
das Abteil mit dem zweiten Fluidkreislauf zu verbinden, so dass das zweite Fluid bei dem zweiten vorbestimmten Druck durch das Abteil strömt und das barokalorische Material durch die Wirkung des zweiten vorbestimmten Drucks gekühlt wird und dass Wärme von dem zweiten Fluid auf das barokalorische Material übertragen wird, was bewirkt, dass das zweite Fluid gekühlt wird.

2. Die Vorrichtung (10) nach Anspruch 1, wobei das barokalorische Material (BA) perforiert ist, so dass das erste und das zweite Fluid durch die Perforationen strömen.

3. Die Vorrichtung (10) nach einem der Ansprüche 1 bis 2, wobei die Kammer (13) eine zylindrische Konfiguration aufweist und die Kammer eine Welle aufweist, so dass die Bewegung eine Drehung um die Welle herum umfasst.

4. Die Vorrichtung (10) nach Anspruch 3, umfassend einen zentralen Rotor (14), ein Gehäuse, das die Kammer bildet, wobei das Gehäuse ein äußeres Gehäuse und Vorder- und Rückwände umfasst, wobei das Abteil aus Trennelementen (12a, 12b, 12c, 12d) gebildet ist und das Abteil durch zwei Trennelemente, den zentralen Rotor, mindestens einen Teil des äußeren Gehäuses und die Vorder- und Rückwände begrenzt ist.

5. Die Vorrichtung (10) nach einem der Ansprüche 1 bis 4, wobei das barokalorische Material mehrere Übergangsbereiche in der endothermen oder exothermen Richtung aufweist und die Vorrichtung mindestens einen zusätzlichen Fluidkreislauf umfasst, wobei jeder der mindestens einen zusätzlichen Fluidkreisläufe dazu konfiguriert ist, ein entsprechendes Fluid bei einem vorbestimmten Druck und einer vorbestimmten Temperatur in Bezug auf einen spezifischen Übergangsbereich des barokalorischen Materials zu strömen.

6. Die Vorrichtung (10) nach einem der Ansprüche 1 bis 5, wobei das erste Fluid eine erste Temperatur aufweist und das zweite Fluid eine zweite Temperatur aufweist, sowohl bevor das erste als auch das zweite Fluid mit dem barokalorischen Material in Kontakt kommen,
wobei die Vorrichtung ferner einen dritten Fluidkreislauf umfasst, der dazu konfiguriert ist, ein drittes Fluid bei dem ersten vorbestimmten Druck und bei einer Zwischentemperatur in Bezug auf die erste Temperatur und die zweite Temperatur zu strömen, und
wobei die Kammer ferner einen dritten Bereich (Z3) umfasst, der mit dem dritten Fluidkreislauf verbunden ist.

7. Die Vorrichtung (10) nach einem der Ansprüche 1 bis 6, wobei das erste Fluid eine erste Temperatur aufweist und das zweite Fluid eine zweite Temperatur aufweist, sowohl bevor das erste als auch das zweite Fluid mit dem barokalorischen Material in Kontakt kommen,
wobei die Vorrichtung ferner einen vierten Fluidkreislauf umfasst, der dazu konfiguriert ist, ein viertes Fluid bei dem zweiten vorbestimmten Druck und bei einer Zwischentemperatur in Bezug auf die erste Temperatur und die zweite Temperatur zu strömen, und
wobei die Kammer ferner einen vierten Bereich (Z4) umfasst, der mit dem vierten Fluidkreislauf verbunden ist.

8. Verfahren zum Erwärmen und Kühlen von Fluiden mittels einer Vorrichtung, umfassend:
mindestens ein Abteil (11a, 11b, 11c, 11d), worin ein barokalorisches Material (BA) bereitgestellt wird;
einen ersten Fluidkreislauf, der dazu konfiguriert ist, ein erstes Fluid bei einem ersten vorbestimmten Druck zu strömen;
einen zweiten Fluidkreislauf, der dazu konfiguriert ist, ein zweites Fluid bei einem zweiten vorbestimmten Druck zu strömen;
wobei sich der erste vorbestimmte Druck und der zweite vorbestimmte Druck voneinander unterscheiden; und
wobei das Abteil innerhalb einer Kammer (13) angeordnet ist, wobei die Kammer mindestens einen ersten Bereich (Z1) zum Erwärmen des barokalorischen Materials und des ersten Fluids und einen zweiten Bereich zum Kühlen des barokalorischen Materials und des zweiten Fluids aufweist;
wobei das Abteil und der erste und zweite Fluidkreislauf zusammen mit der Kammer relativ zueinander beweglich sind, so dass das Abteil zwischen dem ersten und zweiten Bereich beweglich ist,
wobei das Verfahren Folgendes umfasst:
verbinden des Abteils mit dem ersten Fluidkreislauf, so dass das erste Fluid bei dem ersten vorbestimmten Druck durch das Abteil strömt und das barokalorische Material unter der Wirkung des ersten vorbestimmten Drucks erwärmt wird, und dass Wärme von dem barokalorischen Material auf das erste Fluid übertragen wird, was bewirkt, dass das erste Fluid erwärmt wird;
verbinden des Abteils mit dem zweiten Fluidkreislauf, so dass das zweite Fluid bei dem zweiten vorbestimmten Druck durch das Abteil strömt und das barokalorische Material unter der Wirkung des zweiten vorbestimmten Drucks gekühlt wird, und dass Wärme von dem zweiten Fluid auf das barokalorische Material übertragen wird, was bewirkt, dass das zweite Fluid gekühlt wird.

9. Das Verfahren nach Anspruch 8, wobei das Verbinden des Abteils mit dem ersten Fluidkreislauf Folgendes umfasst:
bewegen des Abteils in Richtung eines ersten Bereichs (Z1) der Kammer, in dem sich der erste Fluidkreislauf befindet;
einwirken auf den ersten Fluidkreislauf, um zu bewirken, dass das erste Fluid bei dem ersten vorbestimmten Druck durch das Abteil strömt.

10. Das Verfahren nach einem der Ansprüche 8 oder 9, wobei das Verbinden des Abteils mit dem zweiten Fluidkreislauf Folgendes umfasst:
bewegen des Abteils in Richtung eines zweiten Bereichs (Z2) der Kammer, in dem sich der zweite Fluidkreislauf befindet;
einwirken auf den zweiten Fluidkreislauf, um zu bewirken, dass das zweite Fluid bei dem zweiten vorbestimmten Druck durch das Abteil strömt.

11. Das Verfahren nach einem der Ansprüche 8 bis 10, wobei das erste Fluid eine erste Temperatur aufweist und das zweite Fluid eine zweite Temperatur aufweist, sowohl bevor das erste als auch das zweite Fluid mit dem barokalorischen Material in Kontakt kommen, wobei das Verfahren vor dem Verbinden des Abteils mit dem zweiten Fluid Folgendes umfasst:
verbinden des Abteils mit einem dritten Fluidkreislauf, so dass ein drittes Fluid bei dem ersten vorbestimmten Druck und bei einer Zwischentemperatur in Bezug auf die erste Temperatur und die zweite Temperatur durch die Kammer strömt, um die Temperatur des barokalorischen Materials an die Temperatur des zweiten Fluids anzupassen.

12. Das Verfahren nach Anspruch 11, wobei das Verbinden des Abteils mit dem dritten Fluidkreislauf Folgendes umfasst:
bewegen des Abteils in Richtung eines dritten Bereichs (Z3) der Kammer, in dem sich der dritte Fluidkreislauf befindet;
einwirken auf den dritten Fluidkreislauf, um zu bewirken, dass das dritte Fluid bei dem ersten vorbestimmten Druck und bei der Zwischentemperatur durch die Kammer strömt.

13. Das Verfahren nach einem der Ansprüche 8 bis 12, wobei das erste Fluid eine erste Temperatur aufweist und das zweite Fluid eine zweite Temperatur aufweist, sowohl bevor das erste als auch das zweite Fluid mit dem barokalorischen Material in Kontakt kommen, wobei das Verfahren vor dem Verbinden des Abteils mit dem ersten Fluid Folgendes umfasst:
verbinden des Abteils mit einem vierten Fluidkreislauf, so dass ein viertes Fluid bei dem zweiten vorbestimmten Druck und bei einer Zwischentemperatur in Bezug auf die erste Temperatur und die zweite Temperatur durch das Abteil strömt, um die Temperatur des barokalorischen Materials an die Temperatur des ersten Fluids anzupassen.

14. Das Verfahren nach Anspruch 13, wobei das Verbinden des Abteils mit dem vierten Fluidkreislauf Folgendes umfasst:
bewegen des Abteils in Richtung eines vierten Bereichs (Z4) der Kammer, in dem sich der vierte Fluidkreislauf befindet;
einwirken auf den vierten Fluidkreislauf, um zu bewirken, dass das vierte Fluid bei dem zweiten vorbestimmten Druck und bei der Zwischentemperatur durch das Abteil strömt.

15. Computerprogrammprodukt umfassend Programmanweisungen, welche, wenn sie durch eine Steuerung ausgeführt werden, die Steuerung veranlassen, ein Verfahren nach einem der Ansprüche 8 bis 14 zum Erwärmen und Kühlen von Fluiden durchzuführen.

## Revendications

1. Dispositif (10) pour refroidir et chauffer des fluides, comprenant :
une chambre
au moins un compartiment (11a, 11b, 11c, 11d) pour loger un matériau barocalorique (BA), dans lequel le compartiment est agencé à l'intérieur de la chambre (13) ;
un premier circuit de fluide configuré pour faire circuler un premier fluide à une première pression prédéterminée ;
un second circuit de fluide configuré pour faire circuler un second fluide à une seconde pression prédéterminée ;
la première pression prédéterminée et la seconde pression prédéterminée étant différentes l'une de l'autre ;
un dispositif de commande ;
dans lequel la chambre (13) a au moins une première zone (Z1) pour chauffer le matériau barocalorique et le premier fluide, et une seconde zone (Z2) pour refroidir le matériau barocalorique et le second fluide, la première zone étant connectée au premier circuit de fluide de sorte que le premier fluide puisse s'écouler à travers la première zone, la seconde zone étant connectée au second circuit de fluide de sorte que le second fluide puisse s'écouler à travers la seconde zone ;
dans lequel le compartiment et les premier et second circuits de fluide ainsi que la chambre sont mobiles l'un par rapport à l'autre, de sorte que le compartiment est mobile entre les première et seconde zones,
**caractérisé en ce que** le dispositif de commande est configuré pour
connecter le compartiment (11a, 11b, 11c, 11d) au premier circuit de fluide de sorte que le premier fluide à la première pression prédéterminée s'écoule à travers le compartiment et que le matériau barocalorique (BA) soit chauffé sous l'effet de la première pression prédéterminée, et que la chaleur soit transférée du matériau barocalorique au premier fluide, provoquant le chauffage du premier fluide, et
pour connecter le compartiment au second circuit de fluide de sorte que le second fluide à la seconde pression prédéterminée s'écoule à travers le compartiment et que le matériau barocalorique soit refroidi par l'effet de la seconde pression prédéterminée, et que la chaleur soit transférée du second fluide au matériau barocalorique, provoquant le refroidissement du second fluide.

2. Le dispositif (10) selon la revendication 1, dans lequel le matériau barocalorique (BA) est perforé, de sorte que les premier et second fluides s'écoulent à travers les perforations.

3. Le dispositif (10) selon l'une quelconque des revendications 1 à 2, dans lequel la chambre (13) a une configuration cylindrique, et la chambre a un arbre, de sorte que le mouvement comprend une rotation autour dudit arbre.

4. Le dispositif (10) selon la revendication 3, comprenant un rotor central (14), un boîtier qui forme la chambre, le boîtier comprenant un boîtier externe et des parois avant et arrière, dans lequel le compartiment est formé d'éléments de division (12a, 12b, 12c, 12d), et le compartiment est délimité par deux éléments de division, le rotor central, au moins une partie du boîtier externe, et les parois avant et arrière.

5. Le dispositif (10) selon l'une quelconque des revendications 1 à 4, dans lequel le matériau barocalorique a plusieurs zones de transition dans le sens endothermique ou exothermique et le dispositif comprend au moins un circuit de fluide supplémentaire, chacun desdits au moins un circuits de fluide supplémentaires étant configuré pour faire circuler un fluide correspondant à une pression et une température prédéterminées liées à une zone de transition spécifique du matériau barocalorique.

6. Le dispositif (10) selon l'une quelconque des revendications 1 à 5, dans lequel le premier fluide est à une première température et le second fluide est à une seconde température, à la fois avant que les premier et second fluides n'entrent en contact avec le matériau barocalorique,
le dispositif comprenant en outre un troisième circuit de fluide configuré pour faire circuler un troisième fluide à la première pression prédéterminée et à une température intermédiaire par rapport à la première température et à la seconde température, et
la chambre comprenant en outre une troisième zone (Z3) connectée au troisième circuit de fluide.

7. Le dispositif (10) selon l'une quelconque des revendications 1 à 6, dans lequel le premier fluide est à une première température et le second fluide est à une seconde température, à la fois avant que les premier et second fluides n'entrent en contact avec le matériau barocalorique,
le dispositif comprenant en outre un quatrième circuit de fluide configuré pour faire circuler un quatrième fluide à la seconde pression prédéterminée et à une température intermédiaire par rapport à la première température et à la seconde température, et
la chambre comprenant en outre une quatrième zone (Z4) connectée au quatrième circuit de fluide.

8. Procédé de chauffage et de refroidissement de fluides, au moyen d'un dispositif comprenant :
au moins un compartiment (11a, 11b, 11c, 11d) dans lequel un matériau barocalorique (BA) est fourni ;
un premier circuit de fluide configuré pour faire circuler un premier fluide à une première pression prédéterminée ;
un second circuit de fluide configuré pour faire circuler un second fluide à une seconde pression prédéterminée ;
dans lequel la première pression prédéterminée et la seconde pression prédéterminée sont différentes l'une de l'autre ; et
dans lequel le compartiment est agencé à l'intérieur d'une chambre (13), la chambre ayant au moins une première zone (Z1) pour chauffer le matériau barocalorique et le premier fluide, et une seconde zone pour refroidir le matériau barocalorique et le second fluide ;
dans lequel le compartiment et les premier et second circuits de fluide ainsi que la chambre sont mobiles l'un par rapport à l'autre, de sorte que le compartiment est mobile entre les première et seconde zones,
le procédé comprenant :
connecter le compartiment au premier circuit de fluide de sorte que le premier fluide à la première pression prédéterminée s'écoule à travers le compartiment et que le matériau barocalorique soit chauffé sous l'effet de la première pression prédéterminée, et que la chaleur soit transférée du matériau barocalorique au premier fluide, provoquant le chauffage du premier fluide ;
relier le compartiment au second circuit de fluide de sorte que le second fluide à la seconde pression prédéterminée s'écoule à travers le compartiment et que le matériau barocalorique soit refroidi sous l'effet de la seconde pression prédéterminée, et que la chaleur soit transférée du second fluide au matériau barocalorique, provoquant le refroidissement du second fluide.

9. Le procédé selon la revendication 8, dans lequel la connexion du compartiment au premier circuit de fluide comprend :
déplacer le compartiment vers une première zone (Z1) de la chambre où se trouve le premier circuit de fluide ;
agir sur le premier circuit de fluide de manière à amener le premier fluide à s'écouler à travers le compartiment à la première pression prédéterminée.

10. Le procédé selon l'une quelconque des revendications 8 ou 9, dans lequel la connexion du compartiment au second circuit de fluide comprend :
déplacer le compartiment vers une seconde zone (Z2) de la chambre où se trouve le second circuit de fluide ;
agir sur le second circuit de fluide de manière à amener le second fluide à s'écouler à travers le compartiment à la seconde pression prédéterminée.

11. Le procédé selon l'une quelconque des revendications 8 à 10, dans lequel le premier fluide est à une première température et le second fluide est à une seconde température, à la fois avant que les premier et second fluides n'entrent en contact avec le matériau barocalorique, le procédé comprenant, avant de connecter le compartiment au second fluide :
connecter le compartiment à un troisième circuit de fluide de sorte qu'un troisième fluide à la première pression prédéterminée et à une température intermédiaire par rapport à la première température et à la seconde température s'écoule à travers le compartiment, de manière à adapter la température du matériau barocalorique à la température du second fluide.

12. Le procédé selon la revendication 11, dans lequel la connexion du compartiment au troisième circuit de fluide comprend :
déplacer le compartiment vers une troisième zone (Z3) de la chambre où se trouve le troisième circuit de fluide ;
agir sur le troisième circuit de fluide de manière à amener le troisième fluide à s'écouler à travers le compartiment à la première pression prédéterminée et à la température intermédiaire.

13. Le procédé selon l'une quelconque des revendications 8 à 12, dans lequel le premier fluide est à une première température et le second fluide est à une seconde température, à la fois avant que les premier et second fluides n'entrent en contact avec le matériau barocalorique, le procédé comprenant, avant de connecter le compartiment au premier fluide :
connecter le compartiment à un quatrième circuit de fluide de sorte qu'un quatrième fluide à la seconde pression prédéterminée et à une température intermédiaire par rapport à la première température et à la seconde température s'écoule à travers le compartiment, de manière à adapter la température du matériau barocalorique à la température du premier fluide.

14. Le procédé selon la revendication 13, dans lequel la connexion du compartiment au quatrième circuit de fluide comprend :
déplacer le compartiment vers une quatrième zone (Z4) de la chambre où se trouve le quatrième circuit de fluide ;
agir sur le quatrième circuit de fluide de manière à amener le quatrième fluide à s'écouler à travers le compartiment à la seconde pression prédéterminée et à la température intermédiaire.

15. Produit de programme informatique comprenant des instructions de programme qui, lorsqu'elles sont exécutées par un dispositif de commande, amènent le dispositif de commande à exécuter un procédé selon l'une quelconque des revendications 8 à 14 pour chauffer et refroidir des fluides.
